# EUROPÄISCHE PATENTSCHRIFT

(11) **EP 0 830 957 B1**
(45) Veröffentlichungstag und Bekanntmachung des Hinweises auf die Patenterteilung: **30.07.2003**
(21) Anmeldenummer: 97108366.2
(22) Anmeldetag: 23.05.1997
(51) Int. Cl.: B60G 9/00, B60G 11/113, B60G 11/46

(54) **Einspannung für den Achskörper einer Fahrzeugachse**
Clamp for an axle boday of a vehicle axle
Dispositif de serrage pour le corps d'essieu de véhicule

(30) Priorität: 19.09.1996 DE 29616351 U
(43) Veröffentlichungstag der Anmeldung: 25.03.1998
(73) Patentinhaber: Otto Sauer Achsenfabrik Keilberg, 63856 Bessenbach-Keilberg (DE)
(72) Erfinder: Koschinat, Hubert H., Dipl.-Ing., 63768 Hösbach (DE)
(74) Vertreter: KEIL & SCHAAFHAUSEN

(56) Entgegenhaltungen:
- EP-A- 0 130 688
- GB-A- 1 266 421
- US-A- 1 379 798
- US-A- 3 437 333
- US-A- 3 964 735
- US-A- 5 366 238

## Beschreibung

Die Erfindung bezieht sich auf eine Einspannung für einen Achskörper einer Fahrzeugachse, nach dem Oberbegriff des Anspruchs 1.

Bei Mehrfachfedern oder mehrlagigen Führungslenkern, welche Bestandteil von Fahrzeugluftfederungen sein können, werden bisher die einzelnen Federlagen bzw. Lenkerlagen gewöhnlich über einer Schraube innerhalb der Achseinspannung zusammengehalten. Auch bei einlagigen Federn oder Lenkern wird gewöhnlich eine solche Schraube mit Mutter verwendet, damit ein Fangblech gegenüber dem Federblatt bzw. Führungslenker und diese gesamte Einheit an dem Achskörper positioniert werden kann. Bei einlagigen Federn oder Lenkern wird bisher anstelle einer durchgehenden Schraube auch in Richtung Achslappen ein Stopfen montiert, welcher in einem Sackloch der Feder bzw. des Lenkers sitzt und die Aufgabe einer Schraubverbindung erfüllen soll. Nachteilig bei diesen bekannten Einspannungen ist, dass die Feder- bzw. Lenkerlagen durch Bohrungen unabhängig davon, ob diese durchgehend oder als Sacklöcher ausgebildet sind, geschwächt werden, was die Bruchgefahr innerhalb der Achseinspannung erhöht, welche u. U. durch eine insgesamt größere Materialstärke ausgeglichen werden müsste. Im Falle von Verschiebungen des Achskörpers auf der Feder bzw. dem Lenker reichen die Querschnitte der Schrauben bzw. Stopfen nicht aus, um die Achse in Position zu halten. Schrauben bzw. Stopfen scheren vielmehr ab, sobald deren Kopf an dem Rand der Öffnung des Achslappens zur Anlage kommt, wodurch sich die Achse weiter verschieben kann. Die Gefahr eines solchen Abscherens besteht insbesondere dann, wenn auftretende Setzerscheinungen der Bügeleinspannung nicht rechtzeitig gewartet, d. h. nicht nachgezogen werden und wenn extreme Einsatzbedingungen, wie schwerer Geländebetrieb, vorliegen. Die bisher immer wieder auftretenden Dejustierungen der Achsausrichtung und im weiteren Verlauf stärkeren Achsverschiebungen können zudem größere Folgeschäden durch hohen Reifenverschleiß, Anlaufen der Reifen an das Fahrzeugschassis oder an die Luftfederbälge, und dergleichen mehr nach sich ziehen.

In der EP-A-0 130 688 ist eine Achseinspannung der eingangs genannten Art vorgeschlagen worden, bei welcher ein Element zwischen einer aus einem Verbundwerkstoff hergestellten Blattfeder und einem mittels Klemmmitteln an der Blattfeder gehaltenen Bauteil angeordnet ist. Das Element hat die Form eines Blattes aus elastischem Werkstoff, welches an einer Seite eine mit dem Blatt einteilig hergestellte und in eine Ausnehmung der Feder eingreifende erste Formation und an seiner anderen Seite eine mit ihm einteilig hergestellte und in eine Ausnehmung des Bauteils eingreifende vorstehende zweite Formation aufweist. Die erste Formation ist dabei eine flache, gewölbte oder kegelstumpfförmige und die Ausnehmung in der Feder eine entsprechende Konfiguration. Die zweite Formation ist eine zylindrische und die Ausnehmung in dem Bauteil eine entsprechende Formation. Hierdurch soll u. a. eine Art Fixiervorrichtung für die Relativstellung zwischen der Feder und dem Bauteil beim Zusammenban vorgesehen werden, welche jedoch für eine elastische last verteilung zwischen den eingeklemmten Flächen von Feder und Bauteil schaffen soll, um die auf den Federverbundwerkstoff der Feder ausgeübte Last zu verteilen und den Ansatz von Ermüdungsrissen in dem Federmaterial zu verhindern. Eine Dejustierung und Verschiebung des Achskörpers gegenüber der Feder kann aufgrund der Formgebung und Elastizität der ersten Formation nicht zuverlässig vermieden werden.

Aus der GB-A-1 266 421 ist ein Blattfederpaket, dessen Federblätter auf dem Federsattel einer Fahrzeugachse festgespannt sind, bekannt, bei welchem in den Federblättern jeweils eine zylindrische Ausnehmung vorgesehen ist, in die ein von einem Federsattel gehaltenes stiftförmiges Fixierelement eingreift. Die Ausnehmung soll dabei als Sackloch ausgebildet sein, um die Bruchgefährdung der Feder zu verringern. Die Gefahr des seitlichen Abscherens der Stifte bei erheblicher Beanspruchung besteht jedoch weiter.

Aufgabe der Erfindung ist es, möglichst ohne Mehraufwand eine Einspannung der eingangs genannten Art unter Vermeidung der beschriebenen Nachteile vorzuschlagen, also insbesondere eine Achseinspannung, bei welcher ein Dejustieren und Verschieben des Achskörpers auf der wenigstens einen Blattfeder bzw. dem wenigstens einen Führungslenker zuverlässiger vermieden ist.

Diese Aufgabe wird bei einer Achseinspannung der eingangs genannten Art erfindungsgemäß mit den Merkmalen des Anspruchs 1 gelöst. Bei der konkaven Vertiefung handelt es sich um ein verhältnismäßig flaches Gebilde von wenigen Millimetern Tiefe in abgerundeter Muldenform, in welche eine entsprechend abgerundete Oberflächenkontur des Schubklotzes eingreift. Auf diese Weise wird eine Schwächung des Federblattes bzw. des Führungslenkers auf ein Minimum reduziert und ist daher vernachlässigbar. Die Vertiefung kann auch mit verhältnismäßig großem Durchmesser eingebracht werden, im Gegensatz zu den bisher vorhandenen Durchgangsbohrungen oder Sacklöchern mit geringem Durchmesser als Länge bzw. Tiefe. Dadurch dass die Vertiefung eine Ringnut mit muldenförmig abgerundetem konkavem Nutgrund ist und die Oberflächenkontur des Schubklotzes einen dazu passenden abgerundeten Ringwulst bildet, wird der Vorteil erreicht, dass eine verhältnismäßig große horizontale Kontaktfläche im Falle einer drohenden Achsverschiebung zu Verfügung steht.

Wenn gemäß einem weiteren Erfindungsmerkmal der Ansatz des Schubklotzes mit radialem Spiel in die Öffnung des Achslappens hineinragt, besteht auch nach der Montage noch die Möglichkeit einer Achsdejustierung um das vorgesehene Spiel. Im Verschiebefall könnte sich der Achskörper allenfalls unter Ausnutzung des vorgesehenen Spiels verschieben, bis der Ansatz des Schubklotzes am Rand der Öffnung des Achslappens anliegt. Derart geringe Verschiebungen führen im allgemeinen nicht zu Problemen.

Soll aber auch letzteres vermieden werden, so kann alternativ der zapfenförmige Ansatz des Schubklotzes die Öffnung des Achslappens im Querschnitt vollständig ausfüllen. Bei entsprechender Fertigungsgenauigkeit durch den Fahrzeughersteller oder bei einer Verstellmöglichkeit der Achsausrichtung an anderer Stelle bietet sich diese Alternative an.

Nach den bisher geschilderten Ausführungsformen der Erfindung sind Achseinspannungen möglich, bei welcher das mindestens eine Federblatt bzw. der mindestens eine Führungslenker oberhalb des Achskörpers oder unterhalb des Achskörpers positioniert ist.

Wenn gemäß einem weiteren Erfindungsvorschlag Federblatt bzw. Führungslenker beidseitig mit je einer erfindungsgemäßen konkaven Vertiefung versehen ist, kann ein und dasselbe Federblatt bzw. ein und derselbe Führungslenker für den Einbau des Achskörpers sowohl unterhalb als auch oberhalb des Federblattes bzw. des Führungslenkers verwendet werden, ohne daß das Federblatt bzw. der Führungslenker gewendet werden müßten. In diesem Fall haben nämlich Federblatt bzw. Führungslenker auf beiden Seiten die erfindungsgemäße Vertiefung für die Aufnahme des Schubklotzes.

Die Vertiefung sollte vorzugsweise vor der Endbehandlung des Federblattes bzw. des Federlenkers eingedrückt oder eingefräst sein, d.h. insbesondere vor einem Kugelstrahlen zur Erzeugung von Oberflächendruckspannungen.

Die Vertiefung hat bspw. eine Tiefe (und dementsprechend die Oberflächenkontur des Schubklotzes eine Höhe) von zwischen 3 bis 8 mm, vorzugsweise etwa 5 mm.

In Verbindung mit einem Loch des Achslappens von etwa 45 mm kann der zapfenförmige Ansatz des Schubklotzes je nach gewünschter Verstellmöglichkeit für die Achsausrichtung z. B. zwischen 30 und 45 mm Durchmesser haben.

Des weiteren kann der Ansatz des Schubklotzes in der Öffnung des Achslappens ein radiales Spiel von zwischen 0 und 15 mm, vorzugsweise etwa 10 mm, haben, um eine entsprechende Justiermöglichkeit vorzusehen.

Ferner wird vorgeschlagen, den Schubklotz kreisscheibenförmig mit einem Durchmesser von zwischen 50 und 60 mm, vorzugsweise etwa 55 mm, auszubilden, um bei einfacher Herstellungs- und Montagemöglichkeit eine sichere Festlegung des Achskörpers auf dem wenigstens einen Federblatt bzw. Führungslenker vorzusehen.

Gemäß einer weiteren Ausführungsform der Erfindung ist der Außendurchmesser der Vertiefung und damit auch der in sie eingreifenden Oberflächenkontur des Schubklotzes, also insbesondere des Ringwulstes, in der Größenordnung des Durchmessers der Öffnung des Achslappens.

Die Oberflächenkontur, insbesondere der Ringwulst, des Schubklotzes, haben bevorzugt einen Außendurchmesser, welcher größer als der Außendurchmesser des Ansatzes des Schubklotzes ist.

Es ist ferner von Vorteil, wenn der Oberflächenbereich des Federblattes bzw. des Führungslenkers innerhalb der Ringnut einen Zentrierkegelstumpf bildet, dessen Oberfläche einen Spalt zu der gegenüberliegenden Oberfläche des Schubklotzes innerhalb des Ringwulstes hat.

Zur Gewichtseinsparung kann in dem Ansatz des Schubklotzes stirnseitig eine Aussparung vorgesehen sein.

Weitere Ziele, Merkmale, Vorteile und Anwendungsmöglichkeiten der Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger Kombination den Gegenstand der Erfindung auch unabhängig von ihrer Zusammenfassung in einzelnen Ansprüchen oder deren Rückbeziehung.

Es zeigen:
- Fig. 1a: eine die Erfindung aufweisende Einspannung, teilweise senkrecht zur geometrischen Achse des Achskörpers geschnitten,
- Fig. 1b: eine erfindungsgemäße Ausführung gemäß Fig. 1a, wobei jedoch der Achskörper unterhalb des Federblattes bzw. Führungslenkers eingespannt ist,
- Fig.2a und 2b: im Schnitt zwei unterschiedliche Ausführungsformen eines erfindungsgemäßen Schubklotzes, welche sich im wesentlichen in dem Durchmesser des Ansatzes voneinander unterscheiden, und
- Fig. 3: eine vergrößerte Ausschnittsdarstellung einer Einspannung ähnlich der in Fig. 1a im Bereich des Schubklotzes.

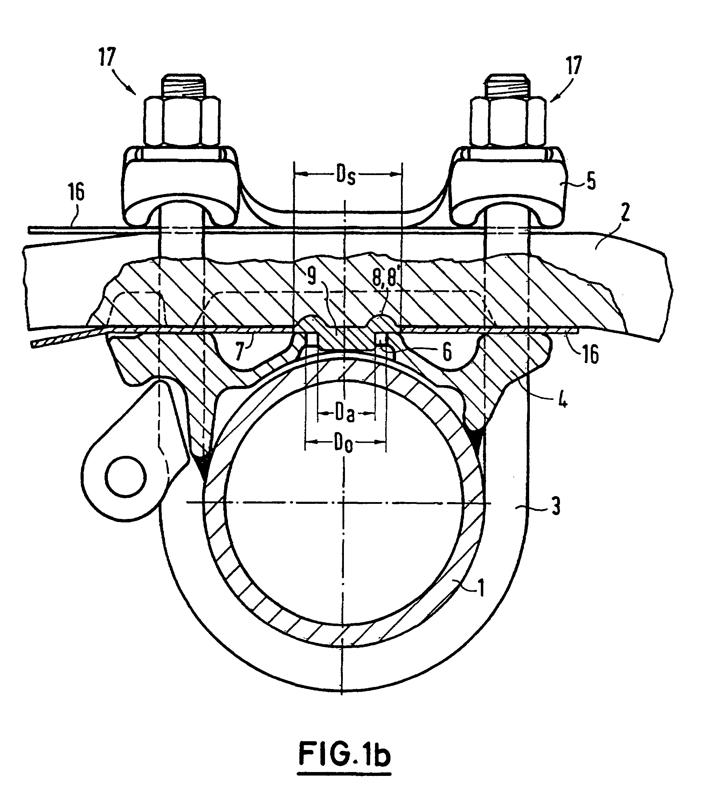

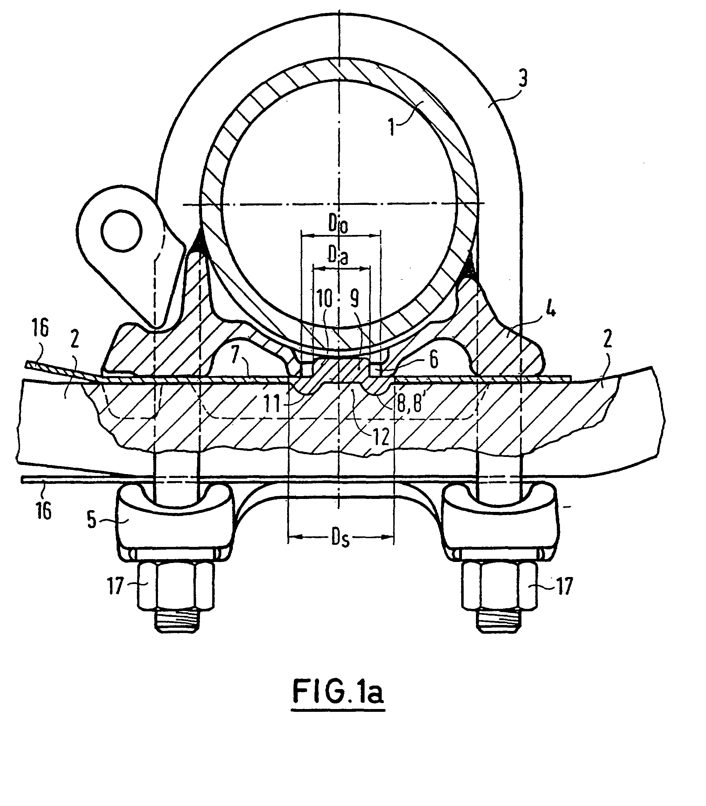

Die in Fig. 1 dargestellte Einspannung des Achskörpers 1 einer Fahrzeugachse an einem Federblatt bzw. Führungslenker 2 erfolgt mittels zweier paralleler U-Bügel 3, welche oben um den Achskörper 1 herumgeführt sind und mit ihren jeweils beiden Enden seitlich an dem Federblatt bzw. Führungslenker 2 vorbeigeführt und an ihren freien Enden eine Verschraubung 17 aufweisen. Die Einspannung des Achskörpers 1 erfolgt dabei zwischen einem an den Achskörper 1 angeschweißten Achslappen 4, welcher sich oben auf dem Federblatt bzw. dem Führungslenker 2 abstützt und einer von unten an dem Federblatt bzw. Führungslenker 2 anliegenden Spannplatte 5. In dem dargestellten Fall ist in die Einspannung auch noch ein verzinktes Fangband 16 aus Korrosionsschutzgründen einbezogen, welches am Vorderende des Federblattes bzw. des Führungslenkers 2 um dessen Anlenkpunkt herumgeführt ist. Um ein Dejustieren bzw. ein Verschieben des Achskörpers 1 auf dem Federblatt bzw. Führungslenker 2 zu verhindern, ist in der dem Achslappen 4 zugeordneten Oberfläche 7 des Federblattes bzw. Federlenkers 2 als Vertiefung 8 eine Ringnut 8' mit abgerundeten Nutgrund eingebracht, in welche ein Schubklotz 9 mit passender konvex abgerundeter Oberflächenkontur in Form eines Ringwulstes 11 eingelegt ist. Dabei ragt der Schubklotz 9 mit einem oberen zylinderzapfenförmigen Ansatz 10 in die Öffnung 6 des Achslappens 4 hinein. Der Außendurchmesser Da des Ansatzes 10 ist geringer als der Durchmesser Do der Öffnung 6 in dem Achslappen 4, so daß ein geringes Spiel von einigen Millimetern verbleibt, welches es gestattet, den Achskörper 1 gegenüber dem Federblatt bzw. dem Führungslenker 2 zu justieren.

Statt der Ringnut 8' kann auch eine muldenförmig abgerundete durchgehende Vertiefung 8 vorgesehen sein, in welche der dargestellte Schubklotz 9 mit dem Ringwulst 11 eingreift oder wahlweise ein anderer Schubklotz 9 mit einer pilzkopfartigen Oberflächenkontur statt des Ringwulstes 11. Die Kombination Ringnut/Ringwulst 8', 11 hat jedoch den Vorteil, daß mehr horizontale Kontaktfläche bei einer drohenden Achsverschiebung zur Verfügung steht.

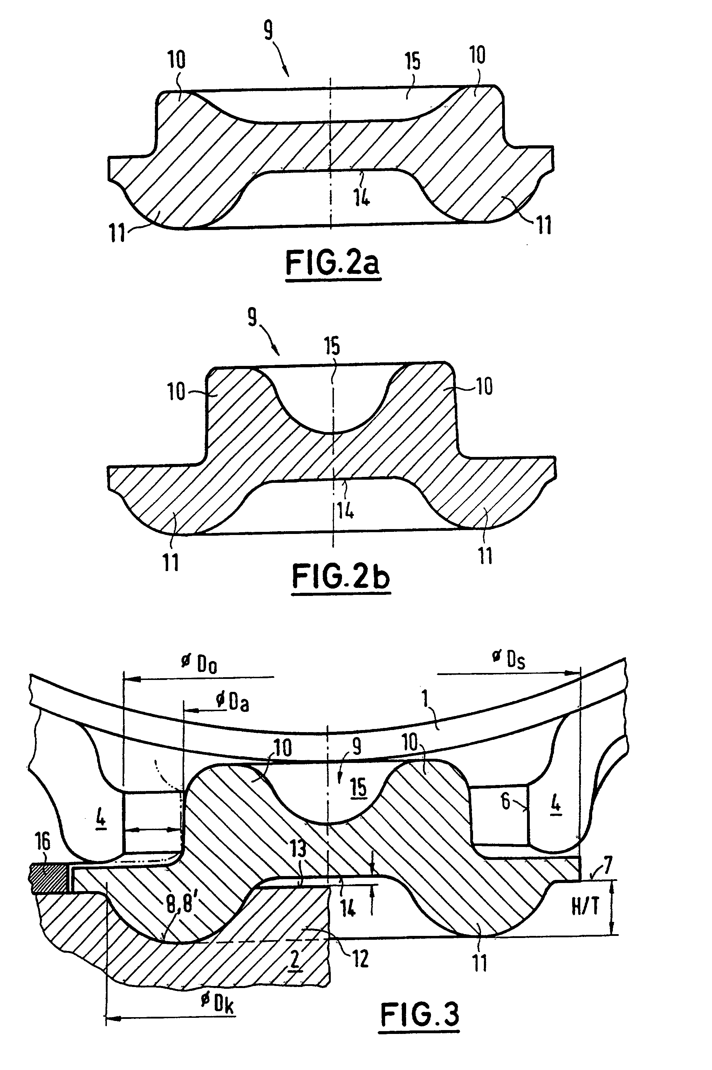

Bei der Ausführung gemäß Fig. 1a ist ein Schubklotz 9 verwendet, welcher bezüglich des Durchmessers Da dem in Fig. 2b dargestellten Schubklotz entspricht. Es ist aber auch möglich, einen Schubklotz 9 gemäß Fig. 2a einzusetzen, dessen zapfenförmiger Ansatz 10 die Öffnung 6 des Achslappens 4 im Querschnitt vollständig ausfüllt.

Bei der Darstellung gemäß Fig. 1a weist das Federblatt bzw. der Führungslenker 2 nur auf seiner oberen Oberfläche 7 eine Vertiefung 8, 8' auf. Das Federblatt bzw. der Führungslenker 2 gemäß Fig. 1b hat lediglich auf seiner unteren Oberfläche 7 eine Vertiefung 8 in Form einer Ringnut 8' entsprechend Fig. 1a. Im übrigen ist die Einspannung aber mit der in Fig. 1a veranschaulichten identisch. Es ist aber auch möglich, das Federblatt bzw. den Führungslenker 2 (auch) auf seinem bzw. seiner jeweils anderen Oberfläche mit einer solchen Vertiefung 8, 8' auszustatten, so daß ein und dasselbe Federblatt bzw. ein und derselbe Führungslenker 2 ohne Drehung sowohl bei einer Einspannung gemäß Fig. 1a als auch bei einer Einspannung gemäß Fig. 1b eingesetzt werden kann.

Gemäß den Fig. 2a und 2b haben die beiden dargestellten Schubklötze 9 jeweils eine stirnseitige Aussparung 15 im Bereich des Ansatzes 10, um Material zu sparen.

In der Detaildarstellung von Fig. 3 sind die bevorzugten Abmessungsverhältnisse veranschaulicht. Dabei hat die Vertiefung 8, 8' eine Tiefe T und dementsprechend die Oberflächenkontur bzw. der Ringwulst 11 des Schubklotzes 9 eine Höhe H, welche bevorzugt zwischen 3 bis 8, insbesondere bei etwa 5 mm, liegt. Der zapfenförmige Ansatz 10 des Schubklotzes 9 hat einen bevorzugten Durchmesser Ds von zwischen 30 und 45 mm, insbesondere etwa 35 mm. In dem dargestellten Fall hat der Ansatz 10 des Schubklotzes 9 in der Öffnung 6 des Achslappens 4 ein radiales Spiel von zwischen 6 und 12 mm, insbesondere etwa 10 mm. Der Durchmesser Ds des im wesentlichen kreisscheibenförmig ausgebildeten Schubklotzes 9 liegt zwischen 50 und 60 mm, vorzugsweise bei etwa 55 mm. In dem dargestellten Fall ist ferner der Außendurchmesser Dv der Vertiefung 8, 8' in der Größenordnung des Durchmessers Do des Öffnung 6 des Achslappens 4. Entsprechendes gilt damit auch für die in die Vertiefung 8, 8' eingreifende oberflächenkontur des Schubklotzes 9, insbesondere den Ringwulst 11. Der Außendurchmesser Dk der Oberflächenkontur, insbesondere des Ringwulstes 11 des Schubklotzes 9, ist größer als der Außendurchmesser Da des Ansatzes 10 des Schubklotzes 9 und insbesondere geringfügig größer als der Durchmesser Do der Öffnung 6 in dem Achslappen 4. Der Außendurchmesser Ds des Schubklotzes 9 ist wiederum geringfügig größer als der Außendurchmesser des Ringwulstes 8, 8'.

Der Oberflächenbereich des Federblattes bzw. Führungslenkers 2 innerhalb der Ringnut 8' ist gemäß Fig. 3 als Zentrierkegelstumpf 12 ausgebildet, dessen Oberfläche 13 einen Spalt zu der gegenüberliegenden Oberfläche 14 des Schubklotzes 9 innerhalb des Ringwulstes 11 hat.

### Bezugszeichen

- 1.: Achskörper
- 2: Federblatt bzw. Führungslenker
- 3: U-Bügel
- 4: Achslappen
- 5: Spannplatte
- 6: Öffnung
- 7: Oberfläche
- 8: Vertiefung
- 8': Ringnut
- 9: Schubklotz
- 10: Ansatz
- 11: Ringwulst
- 12: Zentrierkegel
- 13: Oberfläche des Zentrierkegels
- 14: Oberfläche des Schubklotzes
- 15: Aussparung
- 16: Fangblech
- 17: Verschraubung

- Da: Außendurchmesser Ansatz
- Dk: Außendurchmesser Oberflächenkontur
- Do: Durchmesser Öffnung
- Ds: Durchmesser Schubklotz

- H: Höhe
- T: Tiefe

## Patentansprüche

1. Einspannung für den Achskörper (1) einer Fahrzeugachse, bei welcher mindestens ein Federblatt (2) oder mindestens ein Führungslenker (2) und der Achskörper (1), z. B. mittels eines U-Bügels (3) zwischen einem an dem Achskörper (1) angeschweißten Achslappen (4) und einer Spannplatte (5), zusammengespannt sind, sowie mit in eine Öffnung (6) des Achslappens (4) hineinragenden Mitteln zum Verhindern des Verschiebens des Achskörpers (1) auf dem Federblatt bzw. dem Führungslenker (2), wobei in der dem Achslappen (4) zugewandten Oberfläche (7) des Federblattes (2) oder des Führungslenkers (2) eine konkave Vertiefung (8) eingebracht und ein Schubklotz (9) mit passender konvexer Oberflächenkontur in die Vertiefung (8) eingelegt ist, welcher mit einem Ansatz (10) in die Öffnung (6) des Achslappens (4) hineinragt, **dadurch gekennzeichnet, dass** die Vertiefung (8) als Ringnut (8') mit konkavem Nutgrund ausgebildet ist und die Oberflächenkontur des Schubklotzes (9) einen dazu passenden Ringwulst (11) bildet.

2. Einspannung nach Anspruch 1, **dadurch gekennzeichnet, dass** der Ansatz (10) des Schubklotzes (9) mit radialem Spiel in die Öffnung (6) des Achslappens (4) hineinragt.

3. Einspannung nach Anspruch 1, **dadurch gekennzeichnet, dass** der zapfenförmige Ansatz (10) des Schubklotzes (9) die Öffnung (6) des Achslappens (4) im Querschnitt vollständig ausfüllt.

4. Einspannung nach einem der Ansprüche 1 bis 3, **dadurch gekennzeichnet, dass** ein Federblatt (2) bzw. Führungslenker (2) beidseitig mit je einer konkaven Vertiefung (8, 8') vorsehen ist.

5. Einspannung nach einem der Ansprüche 1 bis 4, **dadurch gekennzeichnet, dass** die Vertiefung (8, 8') vor der Endbehandlung des Federblattes (2) bzw. des Führungslenkers (2) eingedrückt oder eingefräst ist.

6. Einspannung nach einem der Ansprüche 1 bis 5, **dadurch gekennzeichnet, dass** die Vertiefung (8, 8') eine Tiefe (T) (und dementsprechend die Oberflächenkontur des Schubklotzes (9) eine Höhe (H)) von zwischen 3 und 8 mm, vorzugsweise etwa 5 mm, hat.

7. Einspannung nach einem der Ansprüche 1 bis 6, **dadurch gekennzeichnet, dass** der Ansatz (10) des Schubklotzes (9) zapfenförmig mit einem Durchmesser (Ds) von zwischen 30 und 45 mm, vorzugsweise etwa 35 mm, ausgebildet ist.

8. Einspannung nach einem der Ansprüche 1 bis 7, **dadurch gekennzeichnet, dass** der Ansatz (10) des Schubklotzes (9) in der Öffnung (6) des Achslappens (4) ein radiales Spiel von zwischen 6 und 12 mm, vorzugsweise etwa 10 mm, hat.

9. Einspannung nach einem der Ansprüche 1 bis 8, **dadurch gekennzeichnet, dass** der Schubklotz (9) kreisscheibenförmig mit einem Durchmesser (Ds) von zwischen 50 und 60 mm, vorzugsweise etwa 55 mm, ausgebildet ist.

10. Einspannung nach einem der Ansprüche 1 bis 9, **dadurch gekennzeichnet, dass** der Außendurchmesser (Dv) der Vertiefung (8, 8') und damit auch der in sie eingreifenden Oberflächenkontur des Schubklotzes (9), insbesondere des Ringwulstes (11), in der Größenordnung des Durchmessers (Do) der Öffnung (6) des Achslappens (4) liegt.

11. Einspannung nach einem der Ansprüche 1 bis 10, **dadurch gekennzeichnet, dass** die Oberflächenkontur, insbesondere der Ringwulst (11), des Schubklotzes (9) einen Außendurchmesser (Dk) hat, welcher größer als der Außendurchmesser (Da) des Ansatzes (10) des Schubklotzes (9) ist.

12. Einspannung nach einem der Ansprüche 1 bis 11, **dadurch gekennzeichnet, dass** der Oberflächenbereich des Federblattes (2) bzw. des Führungslenkers (2) innerhalb der Ringnut (8') einen Zentrierkegelstumpf (12) bildet, dessen Oberfläche (13) einen Spalt zu der gegenüberliegenden Oberfläche (14) des Schubklotzes (9) innerhalb des Ringwulstes (11) hat.

13. Einspannung nach einem der Ansprüche 1 bis 12, **dadurch gekennzeichnet, dass** in dem Ansatz (10) des Schubklotzes (9) stirnseitig eine Aussparung (15) vorgesehen ist.

## Claims

1. Clamp for an axle body (1) of a vehicle axle in which at least one spring leaf (2) or at least one radius arm (2) and the axle body (1) are clamped together e.g. by means of a U-bracket (3) between an axle tab (4) welded to the axle body (1) and a clamping plate (5), and with means projecting into an opening (6) of the axle tab (4) to prevent the displacement of the axle body (1) on the spring leaf or radius arm (2), where a concave recess (8) is incorporated in the surface (7) of the spring leaf (2) or radius arm (2) facing the axle tab (4) and a thrust block (9) with corresponding convex surface contour is laid in the recess (8), which block protrudes with a shoulder (10) into the opening (6) of the axle tab (4), **characterised in that** the recess (8) is formed as a ring groove (8') with concave groove base and the surface contour of the thrust block (9) forms a corresponding ring bead (11).

2. Clamp according to claim 1, **characterised in that** the shoulder (10) of the thrust block (9) is protrudes with radial play into the opening (6) of the axle tab (4).

3. Clamp according to claim 1, **characterised in that** the peg-like shoulder (10) of the thrust block (9) completely fills the cross-sectional area of the opening (6) of the axle tab (4).

4. Clamp according to any of claims 1 to 3, **characterised in that** a spring leaf (2) or radius arm (2) has a concave recess (8, 8') on both sides.

5. Clamp according to any of claims 1 to 4, **characterised in that** the recess (8, 8') is indented or milled prior to the final processing of the spring leaf (2) or radius arm (2).

6. Clamp according to any of claims 1 to 5, **characterised in that** the recess (8, 8') has a depth (T) (and consequently the surface contour of the thrust block (9) has a height (H)) of between 3 and 8 mm, preferably around 5 mm.

7. Clamp according to any of claims 1 to 6, **characterised in that** the shoulder (10) of the thrust block (9) is formed peg-like with a diameter (Ds) between 30 and 45 mm, preferably around 35 mm.

8. Clamp according to any of claims 1 to 7, **characterised in that** the shoulder (10) of the thrust block (9) in the opening (6) of the axle tab (4) has a radial play of between 6 and 12 mm, preferably around 10 mm .

9. Clamp according to any of claims 1 to 8, **characterised in that** the thrust block (9) is formed circular disc-shaped with a diameter (Ds) between 50 and 60 mm, preferably around 55 mm.

10. Clamp according to any of claims 1 to 9, **characterised in that** the outer diameter (Dv) of the recess (8, 8') and hence also of the surface contour protruding therein of the thrust block (9), in particular the ring bead (11), lies in the order of magnitude of the diameter (Do) of the opening (6) of the axle tab (4).

11. Clamp according to any of claims 1 to 10, **characterised in that** the surface contour, in particular the ring bead (11), of the thrust block (9) has an outer diameter (Dk) which is greater than the outer diameter (Da) of the shoulder (10) of the thrust block (9).

12. Clamp according to any of claims 1 to 11, **characterised in that** the surface area of the spring leaf (2) or radius arm (2) within the ring groove (8') forms a centring truncated cone (12), the surface (13) of which has a gap from the opposing surface (14) of the thrust block (9) inside the ring bead (11).

13. Clamp according to any of claims 1 to 12, **characterised in that** on the face if the shoulder (10) of the thrust block (9) is provided a recess (15).

## Revendications

1. Dispositif de serrage pour le corps d'essieu (1) d'un axe de véhicule, dans lequel au moins une lame de ressort (2) ou au moins un bras de guidage (2) et le corps d'essieu (1) sont serrés ensemble, par exemple au moyen d'une bride en U (3) disposée entre une patte d'axe (4) soudée au corps d'essieu (1) et une plaque de serrage (5), ainsi qu'avec un moyen pour empêcher le corps d'essieu (1) de se déplacer sur la lame de ressort ou le bras de guidage (2), ledit moyen dépassant dans une ouverture (6) de ta patte d'axe (4), un enfoncement concave (8) étant pratiqué dans la surface (7) de la lame de ressort (2) ou du bras de guidage (2) dirigée vers la patte d'axe (4) et un sabot de poussée (9) ayant un contour de surface convexe correspondant étant placé dans l'enfoncement (8), lequel sabot de poussé dépasse avec un épaulement (10) dans l'ouverture (6) de la patte d'axe (4), **caractérisé en ce que** l'enfoncement (8) a la forme d'une rainure annulaire (8') avec un fond de rainure concave et que le contour de surface du sabot de poussée (9) forme un bourrelet annulaire (11) correspondant.

2. Dispositif de serrage selon la revendication 1, **caractérisé en ce que** l'épaulement (10) du sabot de poussée (9) dépasse dans l'ouverture (6) de la patte d'axe (4) avec un jeu radial.

3. Dispositif de serrage selon la revendication 1, **caractérisé en ce que** l'épaulement en forme de tenon (10) du sabot de poussée (9) remplit, en coupe transversale, entièrement l'ouverture (6) de la patte d'axe (4).

4. Dispositif de serrage selon l'une des revendications 1 à 3, **caractérisé en ce qu'**une lame de ressort (2) ou un bras de guidage (2) est muni des deux côtés d'un enfoncement concave (8, 8').

5. Dispositif de serrage selon l'une des revendications 1 à 4, **caractérisé en ce que** l'enfoncement (8, 8') est enfoncé ou fraisé avant le traitement final de la lame de ressort (2) ou du bras de guidage (2).

6. Dispositif de serrage selon l'une des revendications 1 à 5, **caractérisé en ce que** l'enfoncement (8, 8') a une profondeur (T) (et par conséquent le contour de surface du sabot de poussée (9) une hauteur (H)) comprise entre 3 et 8 millimètres, de préférence d'environ 5 millimètres.

7. Dispositif de serrage selon l'une des revendications 1 à 6, **caractérisé en ce que** l'épaulement (10) du sabot de poussée (9) est en forme de tenon ayant un diamètre (Da) compris entre 30 et 45 millimètres, de préférence d'environ 35 millimètres.

8. Le dispositif de serrage selon l'une des revendications 1 à 7, **caractérisé en ce que** l'épaulement (10) du sabot de poussée (9) a dans l'ouverture (6) de la patte d'axe (4) un jeu radial compris entre 6 et 12 millimètres, de préférence d'environ 10 millimètres.

9. Dispositif de serrage selon l'une des revendications 1 à 8, **caractérisé en ce que** le sabot de poussée (9) est en forme de disque circulaire avec un diamètre (Ds) compris entre 50 et 60 millimètres, de préférence d'environ 55 millimètres.

10. Dispositif de serrage selon l'une des revendications 1 à 9, **caractérisé en ce que** le diamètre extérieur (Dk) de l'évidement (8, 8'), et donc aussi le contour de surface s'engageant dedans du sabot de poussée (9), en particulier du bourrelet annulaire (11), se situe dans l'ordre de grandeur du diamètre (Do) de l'ouverture (6) de la patte d'axe (4).

11. Le dispositif de serrage selon l'une des revendications 1 à 10, **caractérisé en ce que** le contour de surface du sabot de poussée (9), en particulier du bourrelet annulaire (11), a un diamètre extérieur (Dk) supérieur au diamètre extérieur (Da) de l'épaulement (10) du sabot de poussée (9).

12. Dispositif de serrage selon l'une des revendications 1 à 11, **caractérisé en ce que** la zone de surface de la lame de ressort (2) ou du bras de guidage (2) forme à l'intérieur de la rainure annulaire (8') un cône de centrage (12) dont la surface (13) a une fente par rapport à la surface (14) placée à l'intérieur du bourrelet annulaire (11) du sabot de poussée (9) et située en face.

13. Dispositif de serrage selon l'une des revendications 1 à 12, **caractérisé en ce qu'**un évidement (15) est prévu dans la face frontale de l'épaulement (10) du sabot de poussée (9).
